# EUROPEAN PATENT SPECIFICATION

(11) **EP 1 807 608 B1**
(45) Date of publication and mention of the grant of the patent: **19.12.2012**
(21) Application number: 05799487.3
(22) Date of filing: 24.10.2005
(51) Int. Cl.: F01K 23/10, F22B 33/16, F22B 1/18

(54) **METHOD AND SYSTEM FOR HEAT RECOVERY**
VERFAHREN UND SYSTEM ZUR WÄRMERÜCKGEWINNUNG
PROCÉDÉ ET SYSTÈME DE RÉCUPÉRATION THERMIQUE

(30) Priority: 03.11.2004 FI 20045419
(43) Date of publication of application: 18.07.2007
(73) Proprietor: Wärtsilä Finland Oy, 65380 Vaasa (FI)
(72) Inventor: HÄGGLUND, Thomas, 65410 Sundom (FI)
(74) Representative: Brax, Matti Juhani
(86) International application number: PCT/FI2005/050371
(87) International publication number: WO 2006/048505

(56) References cited:
- EP-A- 0 773 348
- FR-A- 1 180 014
- US-A- 3 769 795
- US-A- 4 753 079
- US-B1- 6 343 570

## Description

The present invention relates to a method for heat recovery from a gas flow, in which method gas is led into a boiler unit comprising at least an evaporator connected to a fluid circuit for generating steam according to the preamble of claim 1. The present invention also relates to a corresponding system according to the preamble of claim 9.

It is previously known to recover heat from a gas flow, e.g. a flow of hot exhaust gas from an internal combustion engine. An example of such a solution may be found in patent publication FI 105 717, corresponding to SE 517 753. In this known solution heat is recovered from exhaust gas by using an evaporator connected to a steam generation device, whereby a heat pump is used to raise the temperature in the steam generation device. The feasibility of this arrangement is not favourable, especially in view of the complexity and costs of the heat pump. Dokuments US-A-4753079 and FR-A-1180014 also disclose methods and systems for recovering heat from a gas flow.

An object of the present invention is to avoid said disadvantages and to achieve a method and system for heat recovery from a gas flow by which the generation of useful steam is increased by employing simple means. This object is attained by a method according to claim 1 and a system according to claim 9.

The basic idea of the invention is to minimise the losses in energy conversion in employing evaporator means arranged in a gas flow and used for generating steam. This is realised by using high pressure steam generated by high grade heat energy at the upstream side of the gas flow to boost low pressure steam generated by low grade heat energy at the downstream side of the same gas flow. In practice this is done by employing a method according to independent claim 1 and a system according to independent claim 7.

This allows for reducing the temperature of the exhaust gas flow to a level that is lower than what would normally be possible in order to generate steam having a given desired pressure based on a given incoming temperature of the fluid fed to the fluid circuits. In other words according to the present invention the amount of recovered heat energy in the form of steam at a certain pressure from the same gas flow is higher than in previously known solutions.

A more effective way for heat recovery in order to increase steam production is to place a third evaporator connected to a third fluid circuit between the first evaporator and the second evaporator in the direction of the gas flow, and to use the third evaporator for generating steam having a given desired pressure. The steam generated by the steam ejector is then brought together with the steam generated by the third evaporator thus increasing efficiency.

In order to further raise the efficiency the number of evaporators and steam ejectors can be increased, whereby the steam circuits may then be combined to optimise the degree of heat recovery.

The evaporators, and the corresponding ejectors, can be arranged in one or more boiler units, e.g. depending on the source of the gas flow.

A preferred source of gas flow is the exhaust gas from an internal combustion engine, e.g. a diesel engine.

The system according to the present invention for heat recovery from a gas flow comprises a boiler unit provided with at least an evaporator connected to a fluid circuit for generating steam. This system may advantageously may be employed in the method according to the invention described above.

In an advantageous and simple arrangement for such a system providing an efficiently and easily controllable process flow the first fluid circuit is provided with a first steam drum with a first fluid feeding means and a first steam outlet and the second fluid circuit is provided with a second steam drum with a second fluid feeding means and a second steam outlet. The first steam outlet is connected to a high pressure steam inlet of the steam ejector and the second steam outlet is connected a low pressure steam inlet of the steam ejector.

If a third evaporator is used, a correspondingly advantageous arrangement is that the third fluid circuit comprises a third steam drum provided with a third fluid feeding means and a third steam outlet. The steam ejector is provided with a fourth steam outlet connected to the third steam outlet so that the steam generated by the steam ejector may be brought together with the steam generated by the third evaporator.

To make the system more compact and to reduce e.g. internal piping, the first steam drum, the second steam drum and the third steam drum are integrated into one unit, preferably a receptacle.

The receptacle is provided with a first partition wall and a second partition wall dividing the receptacle into a first section forming the first steam drum, a second section forming the second steam drum and a third section forming the third steam drum in this order.

A further degree of integration may be achieved in that the steam ejector is arranged in the second section. The first steam outlet may be arranged as a first opening in the first partition wall in order to form the high pressure steam inlet of the steam ejector and the low pressure steam inlet of the steam ejector is formed by the second steam outlet, whereby the fourth steam outlet is arranged in the second partition wall.

A simple ejector construction may be achieved by attaching a first end of a first ejector pipe to the first opening, forming the high pressure steam inlet, and by attaching a second end of a second ejector pipe to the second opening. A second end of the first ejector pipe may then extend into an enlarged first end of the second ejector pipe to form the low pressure steam inlet.

Further advantageous features of the method and system according to the present invention are given in the dependent claims.

In the following the present invention is described more in detail, by way of example only, with reference to the attached schematic drawings, in which

Fig. 1 shows a flow sheet of a first embodiment of the invention,

Fig. 2 shows a flow sheet of a second embodiment of the invention, and

Fig. 3 shows an embodiment of an integrated steam drum and steam ejector arrangement.

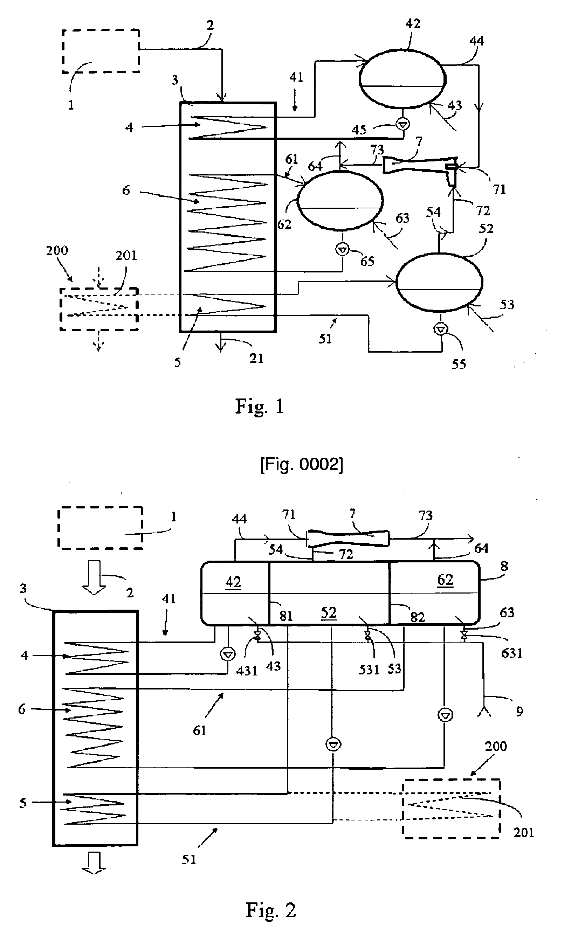

In the system shown in Fig. 1 reference numeral 1 indicates an internal combustion engine which provides a gas flow 2 to a boiler unit 3. This could for example be a diesel engine, whereby the flow of gas would be the exhaust gas from this engine. The boiler unit 3 comprises a first evaporator 4, a third evaporator 6 and a second evaporator 5 arranged one after another in this order in the direction of the gas flow.

The first evaporator 4 is connected to a first fluid circuit 41 provided with a first steam drum 42. The first steam drum 42 is provided with a first fluid feeding means 43 and a first steam outlet 44. The fluid, i.e. normally water, is fed into the first steam drum 42 by means of the first fluid feeding means 43 and is then circulated in the first fluid circuit 41 through the first evaporator 4 by a first pump 45 in order to generate high pressure steam in the first steam drum 42. The high pressure steam is released from the first steam drum 42 by way of the first steam outlet 44.

The third evaporator 6 is connected to a third fluid circuit 61 provided with a third steam drum 62. The third steam drum 62 is provided with a third fluid feeding means 63 and a third steam outlet 64. The fluid, i.e. normally water, is fed into the third steam drum 62 by means of the third fluid feeding means 63 and is then circulated in the third fluid circuit 61 through the third evaporator 6 by a third pump 65 in order to generate steam having a given desired pressure in the third steam drum 62. Steam having a given desired pressure is released from the third steam drum 62 by way of the third steam outlet 64.

The second evaporator 5 is connected to a second fluid circuit 51 provided with a second steam drum 52. The second steam drum 52 is provided with a second fluid feeding means 53 and a second steam outlet 54. The fluid, i.e. normally water, is fed into the second steam drum 52 by means of the second fluid feeding means 53 and is then circulated in the second fluid circuit 51 through the second evaporator 5 by a second pump 55 in order to generate low pressure steam in the second steam drum 52. The low pressure steam is released from the second steam drum 52 by way of the second steam outlet 54.

The system further comprises a steam ejector 7 with a high pressure steam inlet 71, a low pressure steam inlet 72 and a fourth steam outlet 73. The steam ejector is used to raise the pressure of the low pressure steam to a given desired pressure by means of the high pressure steam. High pressure steam generated by the first evaporator 4 is led to the high pressure steam inlet 71 of the steam ejector 7 and low pressure steam generated by the second evaporator 5 is led to the low pressure steam inlet 72 of the steam ejector 7, whereby the high pressure steam is used as a drive fluid for the steam ejector so that the resulting ejector effect generates steam having a given desired pressure from the fourth steam outlet 73. This steam is then brought together with steam, having the same given desired pressure, generated by the third evaporator 6 (described above) in order to increase the production of steam with a given desired pressure, so-called useful steam.

The method according to the invention generally works as follows.

Hot exhaust gas from the internal combustion engine 1, for example a diesel engine, is led as a gas flow 2 to the boiler unit 3 where it flows past the series of evaporators and leaves the boiler unit 3 as a cooled gas flow 21.

In each fluid circuit fluid is fed into the steam drum by means of the fluid feeding means and is then pumped by the pump means into circulation through the evaporator, from where it is led back to the upper part of the steam drum as steam that is released from the steam outlet.

At the first evaporator 4 the high grade heat energy (due to the high incoming temperature of the exhaust gas) is recovered and converted into a high pressure steam with a pressure that normally is higher than what e.g. is suitable for use as an industrial process steam or steam for a steam turbine (so-called useful steam). This high pressure steam is led from the first steam outlet 44 to the steam ejector 7 to be used as a drive fluid.

As the gas flow reaches the third evaporator 6 it naturally has cooled of to some degree and is used to generate steam of a given desired pressure suitable for the intended use, e.g. for the above mentioned purposes, from the third steam outlet 64.

After further cooling, the gas flow reaches the second evaporator 5 where the cooled gas flow at the end of the boiler unit 3 provides low grade heat energy (due to a significantly lowered temperature) which is used to generate a low pressure steam with a pressure that normally is lower than what e.g. is suitable for use as described above. This low pressure steam is then led from the second steam outlet 54 to the steam ejector 7, in which the above mentioned high pressure steam is used to boost the low pressure up to a given desired pressure.

Steam generated in the third fluid circuit 61 by the third evaporator 6 is then brought together with steam generated by the steam ejector 7 resulting in an increased production of so-called useful steam having a given desired pressure.

Basically this means that the temperature of the exhaust gas flow can be reduced to a level that is lower than what would be possible in order to generate steam having a given desired pressure based on a given incoming temperature of the fluid. The result is that the amount of recovered heat energy in the form of a given desired steam pressure from the same gas flow is higher than what has been possible by previously known solutions.

The third evaporator 6 and the thereto related third fluid circuit 61, third steam drum 62, third fluid inlet 63, third steam outlet 64 and third pump 65 can be left out of the system, whereby steam with a given desired pressure may be produced only by means of the steam ejector 7.

Fig. 2 shows another embodiment of the present invention. This embodiment follows the general set up of the embodiment described in Fig. 1, whereby also the same reference numerals are used to indicate corresponding parts as described in connection with Fig. 1. The main difference may be found in the arrangement of the steam drums and the steam ejector.

The steam drums, i.e. the first steam drum 42, the second steam drum 52 and the third steam drum 62 are integrated into one unit, in this case a receptacle 8, one after another in this order. The receptacle 8 is provided with a first partition wall 81 and a second partition wall 82. The partition walls divide the receptacle 8 into a first section forming the first steam drum 42, a second section forming the second steam drum 52 and a third section forming the third steam drum 62 in this order, whereby the first partition wall 81 separates the first steam drum 42 and the second steam drum 52 and the second partition wall 82 separates the second steam drum 52 and the third steam drum 62.

The first steam drum 42, the second steam drum 52 and the third steam drum 62 have their respective first fluid feeding means 43, second fluid feeding means 53 and third fluid feeding means 63, which are connected to a common fluid source 9 through respective first valve means 431, second valve means 531 and third valve means 631.

The first steam drum 42 is provided with a first steam outlet 44 for feeding high pressure steam to the high pressure steam inlet 71 of the steam ejector 7 and the second steam drum 52 is provided with a second steam outlet 54 for feeding low pressure steam into the low pressure steam inlet 72 of the steam ejector 7.

Steam, having a given desired pressure, generated by the steam ejector 7 from the fourth steam outlet 73 is arranged to be brought together with steam, also having a given desired pressure, generated in the third steam drum 62 and released from the corresponding third steam outlet 64.

The working process described in connection with Fig. 1 above is also applicable to this embodiment.

This system may also be operated without the third evaporator 6 by closing of the corresponding fluid feeding means 63 with the third valve means 631 and the corresponding third fluid circuit 61 as described in connection with Fig. 1 above.

In connection with Figs. 1 and 2 there is also shown an additional separate source of heat (typically low grade heat) for heat recovery, which source is indicated by reference numeral 200. Heat recovery is made by a heat exchanger 201, which may be connected to the second fluid circuit 51, if so desired.

In both embodiments it would further be possible to provide a superheater, which would be placed in the same gas flow before the first evaporator 4. Further, a supplementary pre-heater could be arranged in the same gas flow either after or parallel with the second evaporator. This option could be used, if it would be useful for the end process in question.

In order to further raise the efficiency the number of evaporators and steam ejectors may be increased. This would mean that low pressure steam and high pressure steam would be generated at different pressure levels, which then could be raised by corresponding ejectors and correspondingly brought together with steam having a given desired pressure. The steam circuits could thus be combined in order to optimise the degree of heat recovery.

The evaporators, and the corresponding ejectors, can be arranged in one or more boiler units, e.g. depending on the source and volume of gas flow.

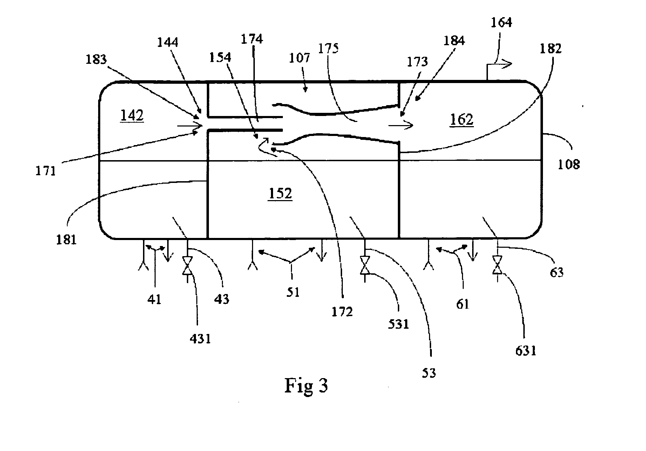

Fig. 3 shows a further embodiment of an integrated steam drum arrangement provided with a steam ejector 107.

The steam drums, i.e. the first steam drum 142, the second steam drum 152 and the third steam drum 162 are integrated into one unit, in this case a receptacle 108, one after another in this order. The receptacle 108 is provided with a first partition wall 181 and a second partition wall 182. The partition walls divide the receptacle 108 into a first section forming the first steam drum 142, a second section forming the second steam drum 152 and a third section forming the third steam drum 162, whereby the first partition wall 181 separates the first steam drum 142 and the second steam drum 152 and the second partition wall 182 separates the second steam drum 152 and the third steam drum 162.

The first steam drum 142, the second steam drum 152 and the third steam drum 162 are connected to a first fluid circuit 41 and a first fluid feeding means 43 provided with a first valve 431, a second fluid circuit 51 and a second fluid feeding means 53 provided with a second valve 531, and a third fluid circuit 61 and a third fluid feeding means 63 provided with a third valve 631 respectively, as described in connection with Fig. 2 above.

In this embodiment, however, the steam ejector 107 is integrated into the structure of the receptacle 108, in the second section forming the second steam drum 152. The first steam outlet 144 of the first steam drum 142 is arranged as a first opening 183 in the first partition wall 181 and leads to the high pressure steam inlet 171 of the steam ejector 107 and the second steam outlet 154 of the second steam drum 152 actually forms the low pressure steam inlet 172 of the steam ejector 107. The fourth steam outlet 173 of the steam ejector 107 is arranged as a second opening 184 in the second partition wall 182 and leads to the third steam drum 162.

A simple way to construct this arrangement is to fix a first end of a first ejector pipe 174 to the first opening 183 in the first partition wall 181 to form the high pressure steam 171 inlet and a second end of a second ejector pipe 175 to the second opening 184 in the second partition wall 182 to form the fourth steam outlet 173. The second end, opposite to the first end, of the first ejector pipe 174 is then arranged to extend into a first enlarged end, opposite the second end, of the second ejector pipe 175 to form an annular low pressure steam inlet 172.

The ejector effect is then achieved when high pressure steam flows from the first steam drum 142 through the first opening 183 into and through the first ejector pipe 174 drawing low pressure steam from the second steam drum 152 by way of the annular low pressure steam inlet 172 into the second ejector pipe 175, thus boosting the pressure of the low pressure steam in order to eject steam having a given desired pressure from the fourth steam outlet 173 of the steam ejector 107 into the third steam drum 162 containing steam of the same pressure provided from the third fluid circuit 61. The resulting steam may then be led out of the third steam outlet 164 of the third steam drum 162.

The working process described in connection with Fig. 1 above is also applicable to this embodiment.

The drawings and the description related thereto are only intended for clarification of the basic idea of the invention. The invention may vary in further detail, e.g. the gas flow may e.g. be flue gas, the fluid used for steam generation may be a liquid solution, the fluid circuits may be provided with control means for further process regulation, etc. within the scope of the ensuing claims.

## Claims

1. Method for heat recovery from a gas flow (2), in which method gas is led into a boiler unit (3) comprising at least an evaporator connected to a fluid circuit for generating steam, **characterised in that** the method employs at least three evaporators, that gas is led in the direction of the gas flow (2) past a first evaporator (4) connected to a first fluid circuit (41), then past a third evaporator (6) connected to a third fluid circuit (61), and subsequently past a second evaporator (6) connected to a second fluid circuit (51), that the first evaporator (4) is used to generate high pressure steam, the third evaporator (6) is used to generate steam having a given desired pressure, and the second evaporator (5) is used to generate low pressure steam, and **in that** high pressure steam and low pressure steam are led to a steam ejector (7) for raising the pressure of the low pressure steam in order to generate steam having said given desired pressure, which is brought together with steam having said given desired pressure generated by the third evaporator (6).

2. Method according to claim 1, **characterised in that** fluid is led to a first fluid inlet (43) of a first steam drum (42) provided in the first fluid circuit (41) and circulated through the first evaporator (4) and back into the first steam drum (4) in order to generate high pressure steam, that fluid is led to a second fluid inlet (53) of a second steam drum (52) provided in the second fluid circuit (51) and circulated through the second evaporator (5) and back into the second steam drum (52) in order to generate low pressure steam, that fluid is led to a third fluid inlet (63) of a third steam drum (62) provided in the third fluid circuit (61) and circulated through the third evaporator (6) and back into the third steam drum (6) in order to generate steam having said given desired pressure, that high pressure steam is led to a high pressure steam inlet (71) of the steam ejector (7) and low pressure steam is lead to a low pressure steam inlet (72) of the steam ejector (7) for raising the pressure of the low pressure steam in order to generate steam having said given desired pressure from a fourth steam outlet (73) of the steam ejector (7), and **in that** steam generated by the steam ejector (7) is brought together with steam having said given desired pressure generated in the third steam drum (6).

3. Method according to claim 1, **characterised in that** the system employs a plurality of evaporators, that gas is led past the evaporators arranged one after another in the direction of the gas flow, that one or more evaporator is used to generate high pressure steam, that one or more evaporator is used to generate low pressure steam, and **in that** high pressure steam and low pressure steam are led to one or more steam ejector for raising the pressure of the low pressure steam in order to generate steam having said given desired pressure.

4. Method according to claim 3, **characterised in that** one or more evaporator is used to generate steam with said given desired pressure, and **in that** steam generated by the one or more steam ejector is brought together with steam having said given desired pressure generated by said one or more evaporator.

5. Method according to claim 5, **characterised in that** the method employs one or more boiler unit (3).

6. Method according to claim 1, **characterised in that** the gas used is exhaust gas from an internal combustion engine (1).

7. System for heat recovery from a gas flow, which system comprises a boiler unit (3) provided with at least an evaporator connected to a fluid circuit for generating steam, **characterised in that** the system comprises at least three evaporators in the direction of the gas flow (2), a first evaporator (4) connected to a first fluid circuit (41), a second evaporator (5) connected to a second fluid circuit (51), and a third evaporator (6) connected to a third fluid circuit (61) and arranged between the first evaporator (4) and the second evaporator (5) in the direction of the gas flow (2), that the first evaporator (4) is arranged to generate high pressure steam, the second evaporator (5) is arranged to generate low pressure steam, the first evaporator (4) and the second evaporator (5) are connected to a steam ejector (7), which is arranged to generate steam having a given desired pressure, that the third evaporator (6) is arranged to generate steam having said given desired pressure, and **in that** the steam having said given desired pressure generated by the steam ejector (7) is arranged to be brought together with steam having said given desired pressure generated by the third evaporator (6).

8. System according to claim 7, **characterised in that** the first fluid circuit (41) is provided with a first steam drum (42) with a first fluid feeding means (43) and a first steam outlet (44), that the second fluid circuit (51) is provided with a second steam drum (52) with a second fluid feeding means (53) and a second steam outlet (54), that the first steam outlet (44) is connected to a high pressure steam inlet (71) of the steam ejector (7) and the second steam outlet (54) is connected a low pressure steam inlet (72) of the steam ejector (7), and **in that** that the third fluid circuit (61) comprises a third steam drum (62) provided with a third fluid feeding means (63) and a third steam outlet (64), and **in that** the steam ejector (7) is provided with a fourth steam outlet (73) connected to the third steam outlet (64).

9. System according to claim 8, **characterised in that** the first steam drum (42), the second steam drum (52) and the third steam drum (62) are integrated into one unit.

10. System according to claim 9, **characterised in that** the first steam drum (42), the second steam drum (52) and the third steam drum (62) are integrated into a receptacle (8), and **in that** the receptacle (8) is provided with a first partition wall (81) and a second partition wall (82) dividing the receptacle into a first section forming the first steam drum (42), a second section forming the second steam drum (52) and a third section forming the third steam drum (62) in this order.

11. System according to claim 10, **characterised in that** the steam ejector (107) is arranged in the second section, that the first steam outlet (144) of the first steam drum (142) is formed by a first opening (183) in the first partition wall (181), that the high pressure steam inlet (171) of the steam ejector (107) is formed by said first opening (183), that the low pressure steam inlet (172) of the steam ejector (107) is formed by the second steam outlet (154) of the second steam drum (162), and **in that** the fourth steam outlet (173) of the steam ejector (107) is formed by a second opening (184) in the second partition wall (182).

12. System according to claim 11, **characterised in that** the steam ejector (107) comprises a first ejector pipe (174) having a first end fixed to the first opening (183) and a second ejector pipe (175) having a second end fixed to the second opening (184), and **in that** a second end of the first ejector pipe (174) extends into an enlarged first end of the second ejector pipe (1 75) in order to form an annular low pressure inlet (172) of the steam ejector (107).

13. System according to claim 8, **characterised in that** the system comprises a plurality of evaporators arranged one after another in the direction of the gas flow, each evaporator being connected to a fluid circuit, that one or more evaporator is arranged to generate high pressure steam, that one or more evaporator is arranged to generate low pressure steam, and **in that** said one or more evaporator arranged to generate high pressure steam and said one or more evaporator arranged to generate low pressure steam are connected to the one or more steam ejector.

14. System according to claim 13, **characterised in that** one or more evaporator is arranged to generate steam with said given desired pressure, and in the one or more steam ejector is provided with a steam outlet connected to a steam outlet of said one or more evaporator,

15. System according to claim 17, **characterised in that** the system comprises one or more boiler unit (3).

16. System according to claim 9, **characterised in that** the system is connected to an internal combustion engine (1) which is arranged to produce exhaust gas for the gas flow (2).

## Patentansprüche

1. Verfahren zur Wärmewiedergewinnung aus einem Gasstrom (2), wobei in dem Verfahren Gas in eine Kesseleinheit (3) geleitet wird, die zumindest einen mit einem Fluidkreislauf verbundenen Verdampfer zum Erzeugen von Dampf aufweist, **dadurch gekennzeichnet, dass** das Verfahren zumindest drei Verdampfer verwendet, dass Gas in der Richtung des Gasstroms (2) an einem mit einem ersten Fluidkreislauf (41) verbundenen ersten Verdampfer (4), dann an einem mit einem dritten Fluidkreislauf (61) verbundenen dritten Verdampfer (6) und anschließend an einem mit einem zweiten Fluidkreislauf (51) verbundenen zweiten Verdampfer (5) vorbeigeleitet wird, dass der erste Verdampfer (4) zum Erzeugen von Hochdruckdampf verwendet wird, der dritte Verdampfer (6) zum Erzeugen von Dampf mit einem gegebenen gewünschten Druck verwendet wird, und der zweite Verdampfer (5) zum Erzeugen von Niederdruckdampf verwendet wird, und dass Hochdruckdampf und Niederdruckdampf zu einem Dampfejektor (7) geleitet werden, um den Druck des Niederdruckstroms anzuheben, um einen Strom mit dem gegebenen gewünschten Druck zu erzeugen, der mit vom dritten Verdampfer (6) erzeugten Dampf mit dem gegebenen gewünschten Druck zusammengebracht wird.

2. Verfahren nach Anspruch 1, **dadurch gekennzeichnet, dass** Fluid zu einem ersten Fluideinlass (43) einer in dem ersten Fluidkreislauf (41) vorgesehenen ersten Dampftrommel (42) geleitet und durch den ersten Verdampfer (4) und zurück in die erste Dampftrommel (4) zirkuliert wird, um Hochdruckdampf zu erzeugen, dass Fluid zu einem zweiten Fluideinlass (53) einer in dem zweiten Fluidkreislauf (51) vorgesehenen zweiten Dampftrommel (52) geleitet und durch den zweiten Verdampfer (5) und zurück in die zweite Dampftrommel (5) zirkuliert wird, um Niederdruckdampf zu erzeugen, dass Fluid zu einem dritten Fluideinlass (63) einer in dem dritten Fluidkreislauf (61) vorgesehenen dritten Dampftrommel (62) geleitet und durch den dritten Verdampfer (6) und zurück in die dritte Dampftrommel (6) zirkuliert wird, um Dampf mit dem gegebenen gewünschten Druck zu erzeugen, dass Hochdruckdampf zu einem Hochdruckdampfeinlass (71) des Dampfejektors (7) geleitet wird und Niederdruckdampf zu einem Niederdruckdampfeinlass (72) des Dampfejektors (7) geleitet wird, um den Druck des Niederdruckdampfs anzuheben, um Dampf mit dem gegebenen gewünschten Druck aus einem vierten Dampfauslass (73) des Dampfejektors (7) zu erzeugen, und dass vom Dampfejektor (7) erzeugter Dampf mit in der dritten Dampftrommel (6) erzeugtem Dampf mit dem gegebenen gewünschten Druck zusammengebracht wird.

3. Verfahren nach Anspruch 1, **dadurch gekennzeichnet, dass** das System eine Mehrzahl von Verdampfern verwendet, dass Gas an den Verdampfern, die in der Richtung des Gasflusses nacheinander angeordnet sind, vorbeigeleitet wird, dass ein oder mehrere Verdampfer dazu verwendet werden, Hochdruckdampf zu erzeugen, dass ein oder mehrere Verdampfer dazu verwendet werden, Niederdruckdampf zu erzeugen, und dass Hochdruckdampf und Niederdruckdampf zu einem oder mehreren Dampfejektoren geleitet werden, um den Druck des Niederdruckdampfs anzuheben, um Dampf mit dem gegebenen gewünschten Druck zu erzeugen.

4. Verfahren nach Anspruch 3, **dadurch gekennzeichnet, dass** ein oder mehrere Verdampfer dazu verwendet werden, Dampf mit dem gegebenen gewünschten Druck zu erzeugen, und dass von dem einen oder mehreren Dampfejektoren erzeugter Dampf mit von dem einen oder mehreren Verdampfer erzeugten Dampf mit dem gegebenen gewünschten Druck zusammengebracht wird.

5. Verfahren nach Anspruch 5, **dadurch gekennzeichnet, dass** das Verfahren eine oder mehrere Kesseleinheiten (3) verwendet.

6. Verfahren nach Anspruch 1, **dadurch gekennzeichnet, dass** das verwendete Gas Abgas von einem Verbrennungsmotor (1) ist.

7. System zur Wärmewiedergewinnung aus einem Gasstrom, wobei das System eine Kesseleinheit (3) aufweist, die mit zumindest einem mit einem Fluidkreislauf verbundenen Verdampfer zum Erzeugen von Dampf versehen ist, **dadurch gekennzeichnet, dass** das System in der Richtung des Gasstroms (2) zumindest drei Verdampfer aufweist, einen mit einem ersten Fluidkreislauf (41) verbundenen ersten Verdampfer (4), einen mit einem zweiten Fluidkreislauf (51) verbundenen zweiten Verdampfer (5), und einen mit einem dritten Fluidkreislauf (61) verbundenen dritten Verdampfer (6), der in der Richtung des Gasstroms zwischen dem ersten Verdampfer (4) und dem zweiten Verdampfer (5) angeordnet ist, dass der erste Verdampfer (4) zum Erzeugen von Hochdruckdampf angeordnet ist, der zweite Verdampfer (5) zum Erzeugen von Niederdruckdampf angeordnet ist, wobei der erste Verdampfer (4) und der zweite Verdampfer (5) mit einem Dampfejektor (7) verbunden sind, der zum Erzeugen von Dampf mit einem gegebenen gewünschten Druck angeordnet ist, dass der dritte Verdampfer (6) zum Erzeugen von Dampf mit dem gegebenen gewünschten Druck angeordnet ist, und dass der vom Dampfejektor (7) erzeugte Dampf mit dem gegebenen gewünschten Druck so angeordnet ist, dass er mit dem vom dritten Verdampfer (6) erzeugten Dampf mit dem gegebenen gewünschten Druck zusammengebracht wird.

8. System nach Anspruch 7, **dadurch gekennzeichnet, dass** der erste Fluidkreislauf (41) mit einer ersten Dampftrommel (42) mit einem ersten Fluidzuführmittel (43) und einem ersten Dampfauslass (44) versehen ist, dass der zweite Fluidkreislauf (51) mit einer zweiten Dampftrommel (52) mit einem zweiten Fluidzuführmittel (53) und einem zweiten Dampfauslass (54) versehen ist, dass der erste Dampfauslass (44) mit einem Hochdruckdampfeinlass (71) des Dampfejektors (7) verbunden ist und der zweite Dampfauslass (54) mit einem Niederdruckdampfeinlass (72) des Dampfejektors (7) verbunden ist, und dass der dritte Fluidkreislauf (61) eine dritte Dampftrommel (62) aufweist, die mit einem dritten Fluidzuführmittel (63) und einem dritten Dampfauslass (64) versehen ist, und dass der Dampfejektor (7) mit einem vierten Dampfauslass (73) versehen ist, der mit dem dritten Dampfauslass (64) verbunden ist.

9. System nach Anspruch 8, **dadurch gekennzeichnet, dass** die erste Dampftrommel (42), die zweite Dampftrommel (52) und die dritte Dampftrommel (62) in eine Einheit integriert sind.

10. System nach Anspruch 9, **dadurch gekennzeichnet, dass** die erste Dampftrommel (42), die zweite Dampftrommel (52) und die dritte Dampftrommel (62) in einer Aufnahme (8) integriert sind, und dass die Aufnahme (8) mit einer ersten Trennwand (81) und einer zweiten Trennwand (82) versehen ist, die in dieser Reihenfolge die Aufnahme in einen die erste Dampftrommel (42) bildenden ersten Abschnitt, einen die zweite Dampftrommel (52) bildenden zweiten Abschnitt und einen die dritte Dampftrommel (62) bildenden dritten Abschnitt, bilden.

11. System nach Anspruch 10, **dadurch gekennzeichnet, dass** der Dampfejektor (107) in dem zweiten Abschnitt angeordnet ist, dass der erste Dampfauslass (144) der ersten Dampftrommel (142) durch eine erste Öffnung (183) in der ersten Trennwand (181) gebildet ist, dass der Hochdruckdampfeinlass (171) des Dampfejektors (107) durch die erste Öffnung (183) gebildet ist, dass der Niederdruckdampfeinlass (172) des Dampfejektors (107) durch den zweiten Dampfauslass (154) der zweiten Dampftrommel (162) gebildet ist, und dass der vierte Dampfauslass (173) des Dampfejektors (107) durch eine zweite Öffnung (184) in der zweiten Trennwand (182) gebildet ist.

12. System nach Anspruch 11, **dadurch gekennzeichnet, dass** der Dampfejektor (107) ein erstes Ejektorrohr (174), das ein an der ersten Öffnung (183) befestigtes erstes Ende aufweist, sowie ein zweites Ejektorrohr (175), das ein an der zweiten Öffnung (184) befestigtes zweites Ende aufweist, umfasst, und dass sich ein zweites Ende des ersten Ejektorrohrs (174) in ein erweitertes erstes Ende des zweiten Ejektorrohrs (175) erstreckt, um einen ringförmigen Niederdruckeinlass (172) des Dampfejektors (107) zu bilden.

13. System nach Anspruch 8, **dadurch gekennzeichnet, dass** das System eine Mehrzahl von Verdampfern aufweist, die in Richtung des Gasflusses nacheinander angeordnet sind, wobei jeder Verdampfer mit einem Fluidkreislauf verbunden ist, dass ein oder mehrere Verdampfer zum Erzeugen von Hochdruckdampf angeordnet sind, dass ein oder mehrere Verdampfer zum Erzeugen von Niederdruckdampf angeordnet sind, und dass der eine oder die mehreren Verdampfer, die zum Erzeugen von Hochdruckdampf angeordnet sind, und der eine oder die mehreren Verdampfer, die zum Erzeugen von Niederdruckdampf angeordnet sind, mit dem einen oder mehreren Dampfejektoren verbunden sind.

14. System nach Anspruch 13, **dadurch gekennzeichnet, dass** ein oder mehrere Verdampfer zum Erzeugen von Dampf mit dem gegebenen gewünschten Druck angeordnet sind, und der eine oder die mehreren Dampfejektoren mit einem Dampfauslass versehen sind, der mit einem Dampfauslass des einen oder der mehreren Verdampfer verbunden ist.

15. System nach Anspruch 17, **dadurch gekennzeichnet, dass** das System eine oder mehrere Kesseleinheiten (3) aufweist.

16. System nach Anspruch 9, **dadurch gekennzeichnet, dass** das System mit einem Verbrennungsmotor (1) verbunden ist, der angeordnet ist, um Abgas für den Gasstrom (2) zu erzeugen.

## Revendications

1. Procédé pour la récupération de chaleur à partir d'un écoulement de gaz (2), dans lequel du gaz de procédé est conduit dans une unité de chaudière (3) comportant au moins un évaporateur relié à un circuit de fluide pour générer de la vapeur, **caractérisé en ce que** le procédé utilise au moins trois évaporateurs, **en ce que** le gaz est conduit dans la direction de l'écoulement de gaz (2) au-delà d'un premier évaporateur (4) relié à un premier circuit de fluide (41), puis au-delà d'un troisième évaporateur (6) relié à un troisième circuit de fluide (61), et ensuite au-delà d'un deuxième évaporateur (5) relié à un deuxième circuit de fluide (51), **en ce que** le premier évaporateur (4) est utilisé pour générer une vapeur à haute pression, le troisième évaporateur (6) est utilisé pour générer une vapeur ayant une pression voulue donnée, et le deuxième évaporateur (5) est utilisé pour générer une vapeur à basse pression, et **en ce que** la vapeur à haute pression et la vapeur à basse pression sont conduites dans un éjecteur de vapeur (7) pour augmenter la pression de la vapeur à basse pression afin de produire de la vapeur ayant ladite pression voulue donnée, laquelle est mélangée à la vapeur ayant ladite pression voulue donnée générée par le troisième évaporateur (6).

2. Procédé selon la revendication 1, **caractérisé en ce que** le fluide est conduit dans un premier orifice d'entrée de fluide (43) d'un premier collecteur de vapeur (42) agencé dans le premier circuit de fluide (41) et circulant à travers le premier évaporateur (4) et revenant dans le premier collecteur de vapeur (4) afin de générer de la vapeur à haute pression, **en ce que** le fluide est conduit dans un deuxième orifice d'entrée de fluide (53) d'un deuxième collecteur de vapeur (52) agencé dans le deuxième circuit de fluide (51) et circulant à travers le deuxième évaporateur (5) et revenant dans le deuxième collecteur de vapeur (52) afin de générer de la vapeur à basse pression, **en ce que** le fluide est conduit dans un troisième orifice d'entrée de fluide (63) d'un troisième collecteur de vapeur (62) agencé dans le troisième circuit de fluide (61) et circulant à travers le troisième évaporateur (6) et revenant dans le troisième collecteur de vapeur (6) afin de générer de la vapeur ayant ladite pression voulue donnée, **en ce que** la vapeur à haute pression est conduite dans un orifice d'entrée de vapeur à haute pression (71) de l'éjecteur de vapeur (7) et la vapeur à basse pression est conduite dans un orifice d'entrée de vapeur à basse pression (72) de l'éjecteur de vapeur (7) pour augmenter la température de la vapeur à basse pression afin de générer de la vapeur ayant ladite pression voulue donnée depuis un quatrième orifice de sortie de vapeur (73) de l'éjecteur de vapeur (7), et **en ce que** la vapeur générée par l'éjecteur de vapeur (7) est mélangée à la vapeur ayant ladite pression voulue donnée générée dans le troisième collecteur de vapeur (6).

3. Procédé selon la revendication 1, **caractérisé en ce que** le système utilise une pluralité d'évaporateurs, **en ce que** le gaz est conduit au-delà des évaporateurs disposés les uns à la suite des autres dans la direction de l'écoulement de gaz, **en ce que** un ou plusieurs évaporateurs sont utilisés pour générer de la vapeur à haute pression, **en ce que** un ou plusieurs évaporateurs sont utilisés pour générer une vapeur à basse pression, et **en ce que** la vapeur à haute pression et la vapeur à basse pression sont conduites dans un ou plusieurs éjecteurs de vapeur pour augmenter la température de la vapeur à basse pression afin de générer de la vapeur ayant ladite pression voulue donnée.

4. Procédé selon la revendication 3, **caractérisé en ce que** un ou plusieurs évaporateurs sont utilisés pour générer de la vapeur ayant ladite pression voulue donnée, et **en ce que** la vapeur générée par l'éjecteur ou les éjecteurs de pression est mélangée à la vapeur ayant ladite pression voulue donnée générée par ledit évaporateur ou lesdits évaporateurs.

5. Procédé selon la revendication 4, **caractérisé en ce que** le procédé utilise une ou plusieurs unités de chaudière (3).

6. Procédé selon la revendication 1, **caractérise en ce que** le gaz utilisé est un gaz d'échappement provenant d'un moteur à combustion interne (1).

7. Système de récupération de chaleur à partir d'un écoulement de gaz, lequel système comporte une unité de chaudière (3) munie d'au moins un évaporateur relié à un circuit de fluide pour générer de la vapeur, **caractérisé en ce que** le système comporte au moins trois évaporateurs dans la direction de l'écoulement de gaz (2), un premier évaporateur (4) relié à un premier circuit de fluide (41), un deuxième évaporateur (5) relié à un deuxième circuit de fluide (51), et un troisième évaporateur (6) relié un troisième circuit de fluide (61) et agencé entre le premier évaporateur (4) et le deuxième évaporateur (5) dans la direction de l'écoulement de gaz (2), **en ce que** le premier évaporateur (4) est conçu pour générer de la vapeur à haute pression, le deuxième évaporateur (5) est conçu pour générer de la vapeur à basse pression, le premier évaporateur (4) et le deuxième évaporateur (5) sont reliés à un éjecteur de vapeur (7), lequel est conçu pour générer de la vapeur ayant une pression voulue donnée, **en ce que** le troisième évaporateur (6) est conçu pour générer de la vapeur ayant ladite pression voulue donnée, et **en ce que** la vapeur ayant ladite pression voulue donnée générée par l'éjecteur de vapeur (7) est prévue pour être mélangée à la vapeur ayant ladite pression voulue donnée générée par le troisième évaporateur (6).

8. Système selon la revendication 7, **caractérisé en ce que** le premier circuit de fluide (41) est muni d'un premier collecteur de vapeur (42) ayant des premiers moyens d'alimentation en fluide (43) et un premier orifice de sortie de vapeur (44), **en ce que** le deuxième circuit de fluide (51) comporte un deuxième collecteur de vapeur (52) ayant des deuxièmes moyens d'alimentation en fluide (53) et un deuxième orifice de sortie de vapeur (54), et **en ce que** le premier orifice de sortie de vapeur (44) est relié à un orifice d'entrée de vapeur à basse pression (71) de l'éjecteur de vapeur (7) et le deuxième orifice de sortie de vapeur (54) est relié à un orifice d'entrée de vapeur à basse pression (72) de l'éjecteur de pression (7), et **en ce que** le troisième circuit de fluide (61) comprend un troisième collecteur de vapeur (62) comportant des troisièmes moyens d'alimentation en fluide (63) et d'un troisième orifice de sortie de vapeur (64), et **en ce que** l'éjecteur de vapeur (7) comporte un quatrième orifice de sortie de vapeur (73) relié au troisième orifice de sortie de vapeur (64).

9. Système selon la revendication 8, **caractérisé en ce que** le premier collecteur de vapeur (42), le deuxième collecteur de vapeur (52) et le troisième collecteur de vapeur (62) sont intégrés dans une même unité.

10. Système selon la revendication 9, **caractérisé en ce que** le premier collecteur de vapeur (42), le deuxième collecteur de vapeur (52) et le troisième collecteur de vapeur (62) sont intégrés dans un réceptacle (8), et **en ce que** le réceptacle (8) comporte une première paroi de séparation (81) et une seconde paroi de séparation (82) divisant le réceptacle en une première section formant le premier collecteur de vapeur (42), en une deuxième section formant le deuxième collecteur de vapeur (52) et en une troisième section formant le troisième collecteur de vapeur (62) dans cet ordre.

11. Système selon la revendication 10, **caractérisé en ce que** l'éjecteur de vapeur (107) est agencé dans la deuxième section, **en ce que** le premier orifice de sortie de vapeur (144) du premier collecteur de vapeur (142) est formé par une première ouverture (183) dans la première paroi de séparation (181), **en ce que** l'orifice d'entrée de vapeur à haute pression (171) de l'éjecteur de vapeur (107) est formé par ladite première ouverture (183), **en ce que** l'orifice d'entrée de vapeur à basse pression (172) de l'éjecteur de vapeur (107) est formé par le deuxième orifice de sortie de vapeur (154) du deuxième collecteur de vapeur (162), et **en ce que** le quatrième orifice de sortie de vapeur (173) de l'éjecteur de vapeur (107) est formé par une deuxième ouverture (184) dans la deuxième paroi de séparation (182).

12. Système selon la revendication 11, **caractérisé en ce que** l'éjecteur de vapeur (107) comporte un premier tube éjecteur (174) ayant une première extrémité fixée à la première ouverture (183) et un second tube éjecteur (175) ayant une seconde extrémité fixée à la seconde ouverture (184), et **en ce que** une seconde extrémité du premier tube éjecteur (174) s'étend dans une première extrémité élargie du second tube éjecteur (175) afin de former un orifice d'entrée à basse pression annulaire (172) de l'éjecteur de vapeur (107).

13. Système selon la revendication 8, **caractérisé en ce que** le système comporte une pluralité d'évaporateurs disposés les uns à la suite des autres dans la direction de l'écoulement de gaz, chaque évaporateur étant relié à un circuit de fluide, **en ce que** un ou plusieurs évaporateurs sont conçus pour générer de la vapeur à haute pression, **en ce que** un ou plusieurs évaporateurs sont conçus pour générer de la vapeur à basse pression, **en ce que** ledit un évaporateur ou lesdits évaporateurs conçus pour générer de la vapeur à haute pression et ledit un évaporateur ou lesdits évaporateurs conçus pour générer de la vapeur à basse pression sont reliés à un ou plusieurs éjecteurs de vapeur.

14. Système selon la revendication 13, **caractérisé en ce que** l'évaporateur ou les évaporateurs sont conçue pour générer de la vapeur ayant ladite pression voulue donnée, et **en ce que** l'éjecteur ou les éjecteurs de vapeur comportant un orifice de sortie de vapeur relié à un orifice de sortie de vapeur dudit un évaporateur ou desdits évaporateurs.

15. Système selon la revendication 14, **caractérisé en ce que** le système comporte une ou plusieurs unités de chaudière (3).

16. Système selon la revendication 9, **caractérisé en ce que** le système est relié à un moteur à combustion interne (1) lequel est conçu pour produire un gaz d'échappement pour l'écoulement de gaz (2).
